# EUROPEAN PATENT SPECIFICATION

(11) **EP 1 169 408 B1**
(45) Date of publication and mention of the grant of the patent: **26.05.2004**
(21) Application number: 00917473.1
(22) Date of filing: 14.03.2000
(51) Int. Cl.: C09K 11/64, C09K 11/02, C09D 5/22

(54) **LUMINESCENT COATING WITH A BASE OF A WATER-BORNE POLYURETHANE DISPERSION**
LUMINISZENZBESCHICHTUNG MIT EINER WÄSSRIGEN POLYURETHAN-DISPERSION
REVETEMENT LUMINESCENT A BASE D'UNE DISPERSION DE POLYURETHANNE EN PHASE AQUEUSE

(30) Priority: 17.03.1999 NL 1011580
(43) Date of publication of application: 09.01.2002
(73) Proprietor: Beele Engineering B.V., 7122 NZ Aalten (NL)
(72) Inventor: BEELE, Johannes, Alfred, NL-7122 NZ Aalten (NL)
(74) Representative: Hooiveld, Arjen Jan Winfried
(86) International application number: PCT/NL2000/000172
(87) International publication number: WO 2000/055278

(56) References cited:
- EP-A- 0 097 377
- US-A- 5 665 793
- DATABASE WPI Section Ch, Week 199719 Derwent Publications Ltd., London, GB; Class A97, AN 1997-209562 XP002120762 & JP 09 059555 A (MITSUBISHI PENCIL CO LTD), 4 March 1997 (1997-03-04)

## Description

The present invention relates to a luminescent coating with a base of a water-borne polyurethane dispersion.

More particularly, the invention relates to a luminescent coating comprising: a luminescent pigment of matrix formula MAl₂O₄, wherein M is at least one metal selected from the group comprising calcium, strontium and barium, or on the other hand of matrix MAl₂O₄, wherein M is a multitude of metal elements, comprising magnesium and at least one element selected from the group consisting of calcium, strontium and barium and a water-borne polyurethane binder dispersion.

A luminescent coating of this kind is known from US-A-5,665,793. According to said publication, a suitable amount of a paint containing a colour pigment is added to the aforesaid luminescent coating. This paint mixture is used as a roadway marking coating having enhanced luminescent properties.

The aforesaid luminescent pigments are sensitive to moisture and water. When luminescent pigments come into contact therewith, a heat-emission reaction results, which makes the coating unsuitable in use. This problem is overcome by diluting a suitable polyurethane dispersion as already recognized in the aforesaid patent with another paint which does not contain such water-sensitive pigments.

Another solution which is well-known for screening said luminescent pigments is to cover them with a protective layer.

It is an object of the present invention, however, is to provide a luminescent coating as such, which is not mixed with any other coating such as the paints provided with the new pigment which are known from the aforesaid US patent. Another object of the invention is to provide a coating which can be applied in minimum film thicknesses having sufficient luminescent power. Such film thicknesses can for example range between 15 and 30 µm, preferably they are about 10 µm.

Another object of the present invention is to provide a suitable dilutant, so that a luminescent coating is obtained which is capable of being sprayed.

The problem of the coating referred to in the introduction is that sagging occurs in the form of a two-phase system after a period of rest. The pigments form the heaviest fraction and they will migrate under the lighter water-borne polyurethane dispersion fraction. This makes the coating unsuitable for use.

Surprisingly, this problem is overcome by adding an anti-sagging additive in a low amount of 0.5 - 10 % by weight to the aforesaid coating. As a result, the luminescent pigments will remain suitably dispersed for a longer period of time, even after a prolonged period of rest of the coating.

Preferably, the anti-sagging additive is a hydrophobic pyrogenous silica. Said anti-sagging additive has appeared to be highly suitable for forming a permanent dispersion of the aforesaid luminescent pigments in a water-borne polyurethane dispersion.

A preferred embodiment of the luminescent coating according to the invention consists of:
- 40 - 80 % by weight of water-borne polyurethane binder dispersion;
- 19.5 - 59.5 % by weight of luminescent pigment;
- 0.5 - 10 % by weight of anti-sagging additive.
- 0 - 5 % by weight of further additives.

The hydrophobic pyrogenous silica as the anti-sagging additive is preferably an AEROSIL®, which is marketed by the firm of Degussa.

Besides using the anti-sagging additive, it is advantageous to use further additives including a dispersion additive in an amount of 0.1 - 5 % by weight. This dispersion additive will further enhance the dispersion quality by preventing any flocculating activity of the luminescent pigments and keeping the anti-sagging additive dispersed. Preferably, the dispersion additive is DISPERBYK®, which is marketed by the firm of Byk Cera.

Preferably, the luminescent coating that is obtained is capable of being sprayed. To this end the invention provides a coating diluted with N-methyl-2-pyrrolidone. A preferred suitable dilution is N-methyl-2-pyrrolidone and water in a weight ratio of 1 : 12.

A preferred formula of the luminescent coating according to the invention is defined hereafter in Table 1.

**TABLE 1**

| Base materials | Type | Supplier | Parts by weight |
|---|---|---|---|
| NeoRez R974 | Binder dispersion | Zeneca Resins | 63.31 |
| RM 4456 | Thickener | Stahl Holland | 0.55 |
| LLA 1698 | Flow additive | stahl Holland | 0.10 |
| Byk 028 | Defoaming agent | Byk Cera | 1.09 |
| Disperbyk | Dispersion additive | Byk Cera | 1.11 |
| Aerosil R 972 | Anti-settling additive | Degussa | 2.19 |
| Luminescent pigment extra fine | Pigment LumiNova® | Nemoto & Co. Ltd. | 31.65 |
| TOTAL | | | 100.00 |

According to another aspect the present invention provides a method for preparing the above-defined luminescent coatings. This method comprises a first step, wherein a base paste for the coating is prepared, after which the luminescent pigment is added to the base paste in a final preparation step. This is done by mixing the luminescent with the base paste through careful stirring so as to ensure that the crystal structure of the luminescent pigments will be retained.

An example of the preparation method is explained in detail hereafter.

First of all, a binder dispersion is weighed in the mixing vessel. Then the defoaming agent, the dispersion additive and the flow additive are added while stirring slowly. Then the anti-setting additive is added, after which it is dispersed to a fineness of < 5 µm by means of a high-speed dispersion apparatus. The dispersion temperature must not rise above 60 °C, however. Following that, the thickener is added while stirring slowly but firmly. Once the thickener is homogeneously dispersed in the paint, check for clots, the luminescent pigment can be added while stirring carefully.

Another aspect of the present invention is the use of the luminescent coating for coating a light-transmitting or transparent surface, for example a lamp housing.

Said use of a luminescent coating according to the present invention on a light-transmitting or transparent surface is already included in the Dutch patent application NL-A-1009136, which has not been published yet.

## Claims

1. A luminescent coating comprising: a luminescent pigment of matrix formula MAl₂O₄, wherein M is at least one metal selected from the group comprising calcium, strontium and barium, or on the other hand of matrix MAl₂O₄, wherein M is a multitude of metal elements, comprising magnesium and at least one element selected from the group consisting of calcium, strontium and barium and a water-borne polyurethane binder dispersion and an anti-sagging additive in an amount of 0,5 - 10 % by weight to said coating.

2. A luminescent coating according to claim 1, wherein said anti-sagging additive is a hydrophobic pyrogenous silica.

3. A luminescent coating according to claim 1 or 2, consisting of:
- 40 - 80 % by weight of water-borne polyurethane binder dispersion;
- 19.5 - 59.5 % by weight of luminescent pigment;
- 0.5 - 10 % by weight of anti-sagging additive;
- 0 - 5 % by weight of further additives.

4. A luminescent coating according to claim 3, wherein said further additives include a dispersion additive in an amount of 0.1 - 5 % by weight.

5. A luminescent coating according to claim 3 or 4, **characterized in that** said further additives are selected from the group consisting of a flow additive, a defoaming agent and a thickener.

6. A luminescent coating according to any one of the preceding claims, wherein said coating is diluted with N-methyl-2-pyrrolidone and water in a weight ratio of 1 : 12.

7. A method suitable for preparing a luminescent coating according to any one of the preceding claims 1 - 6, wherein a base paste for the coating is prepared in a first step and the luminescent pigment is added to the base paste in a final step.

8. A method according to claim 7, **characterized in that** the water-borne polyurethane binder dispersion is weighed in a first step, then the defoaming agent, the dispersion additive and the flow additive are added while stirring slowly, then the anti-sagging additive is added in a next step by means of a high-speed dispersion apparatus and the obtained mixture is stirred for a suitable period of time, using a suitable number of revolutions, whereby the temperature must not rise above 60 °C, after which the thickener is added while stirring, and in a final step the luminescent pigment is added.

9. Use of a luminescent coating according to any one of the preceding claims 1 - 6 for coating a light-transmitting or transparent surface.

10. Use according to claim 9, wherein said light-transmitting or transparent surface is a lamp housing.

## Patentansprüche

1. Lumineszenzbeschichtung, welche umfaßt:
ein Lumineszenzpigment der Matrixformel MAl₂O₄, wobei M wenigstens ein Metall ist, das ausgewählt ist aus der Gruppe umfassend Calcium, Strontium und Barium, oder andererseits der Matrix MAl₂O₄, wobei M eine Vielzahl an Metallelementen ist, welche Magnesium und wenigstens ein Element umfassen, das ausgewählt ist aus der Gruppe bestehend aus Calcium, Strontium und Barium, und eine wäßrige Polyurethanbindemitteldispersion und ein Anti-Ablaufadditiv in einer Menge von 0,5-10 Gew.-% der Beschichtung.

2. Lumineszenzbeschichtung nach Anspruch 1, **dadurch gekennzeichnet, daß** das Anti-Ablaufadditiv ein hydrophobes, pyrogenes Silica ist.

3. Lumineszenzbeschichtung nach Anspruch 1 oder 2, bestehend aus:
- 40-80 Gew.-% wäßriger Polyurethanbindemitteldispersion;
- 19,5-59,5 Gew.-% Lumineszenzpigment;
- 0,5-10 Gew.-% Anti-Ablaufadditiv;
- 0-5 Gew.-% weiteren Additiven.

4. Lumineszenzbeschichtung nach Anspruch 3, **dadurch gekennzeichnet, daß** die weiteren Additive ein Dispersionsadditiv in einer Menge von 0,1-5 Gew.-% einschließen.

5. Lumineszenzbeschichtung nach Anspruch 3 oder 4, **dadurch gekennzeichnet, daß** weitere Additive ausgewählt sind aus der Gruppe bestehend aus einem Flußadditiv, einem Entschäumungsagens und einem Verdickungsmittel.

6. Lumineszenzbeschichtung nach einem vorangehenden Ansprüche, **dadurch gekennzeichnet, daß** die Beschichtung mit N-Methyl-2-pyrrolidon und Wasser in einem Gewichtsverhältnis von 1: 12 verdünnt ist.

7. Verfahren, das zum Herstellen einer Lumineszenzbeschichtung nach einem der vorangehenden Ansprüche 1 bis 6 geeignet ist, wobei eine Grundpaste für die Beschichtung hergestellt wird in einem ersten Schritt und das Lumineszenzpigment zu der Grundpaste in einem Endschritt zugefügt wird.

8. Verfahren nach Anspruch 7, **dadurch gekennzeichnet, daß** die wäßrige Polyurethanbindemitteldispersion in einem ersten Schritt gewogen wird, dann das Entschäumungsagens, das Dispersionsadditiv und das Flußadditiv zugefügt werden, während langsam gerührt wird, dann das Anti-Ablaufadditiv in einem nächsten Schritt mittels einer Hochgeschwindigkeitsdispersionsvorrichtung zugefügt wird und die erhaltene Mischung für eine geeignete Zeitdauer unter Verwendung einer geeigneten Anzahl an Umdrehungen gerührt wird, wobei die Temperatur nicht über 60°C steigen darf, woraufhin das Verdickungsmittel während gerührt wird zugefügt wird, und in einem Endschritt das Lumineszenzpigment zugefügt wird.

9. Verwendung einer Lumineszenzbeschichtung nach einem der vorangehenden Ansprüche 1 bis 6 zum Beschichten einer Licht durchlassenden oder transparenten Oberfläche.

10. Verwendung nach Anspruch 9, **dadurch gekennzeichnet, daß** die Licht durchlassende oder transparente Oberfläche ein Lampengehäuse ist.

## Revendications

1. Revêtement luminescent comprenant : un pigment luminescent de formule élémentaire MAl₂O₄, M étant au moins un métal choisi dans le groupe qui comprend le calcium, le strontium et le baryum, ou d'autre part de formule élémentaire MAl₂O₄ dans laquelle M correspond à plusieurs éléments métalliques, comprenant du magnésium et au moins un élément choisi dans le groupe formé par le calcium, le strontium et le baryum, une dispersion aqueuse d'un liant de polyuréthanne et un adjuvant contre l'affaissement en quantité comprise entre 0,5 et 10 % en poids du revêtement.

2. Revêtement luminescent selon la revendication 1, dans lequel l'adjuvant contre l'affaissement est de la silice pyrogène hydrophobe.

3. Revêtement luminescent selon la revendication 1 ou 2, constitué par :
40 à 80 % en poids d'une dispersion aqueuse d'un liant de polyuréthanne,
19,5 à 59,5 % en poids de pigment luminescent,
0,5 à 10 % en poids d'adjuvant contre l'affaissement, et
0 à 5 % en poids d'adjuvants supplémentaires.

4. Revêtement luminescent selon la revendication 3, dans lequel les adjuvants supplémentaires comprennent un adjuvant de dispersion en quantité comprise entre 0,1 et 5 % en poids.

5. Revêtement luminescent selon la revendication 3 ou 4, **caractérisé en ce que** les adjuvants supplémentaires sont sélectionnés dans le groupe qui comprend les adjuvants d'écoulement, un agent antimousse et un agent épaississant.

6. Revêtement luminescent selon l'une quelconque des revendications précédentes, dans lequel le revêtement est dilué par de la N-méthyl-2-pyrrolidone dans un rapport pondéral de 1 à 12.

7. Procédé convenant à la préparation d'un revêtement luminescent selon l'une quelconque des revendications précédentes 1 à 6, dans lequel une pâte de base du revêtement est préparée dans une première étape et le pigment luminescent est ajouté à la pâte de base dans une étape finale.

8. Procédé selon la revendication 7, **caractérisé en ce que** la dispersion aqueuse de liant de polyuréthanne est pesée dans une première étape, puis l'agent antimousse, l'agent de dispersion et l'agent d'écoulement sont ajoutés sous agitation lente, puis l'adjuvant contre l'affaissement est ajouté dans une étape suivante dans un appareil de dispersion à grande vitesse, et le mélange obtenu est agité pendant une période convenable, avec un nombre convenable de tours, si bien que la température ne peut pas augmenter au-delà de 60 °C, puis l'agent épaississant est ajouté sous agitation et, dans une étape finale, le pigment luminescent est ajouté.

9. Application d'un revêtement luminescent selon l'une quelconque des revendications 1 à 6 au revêtement d'une surface transparente ou transmettant la lumière.

10. Application selon la revendication 9, dans laquelle la surface transparente ou transmettant la lumière est un boîtier de lampe.
